# EUROPÄISCHE PATENTSCHRIFT

(11) **EP 1 189 954 B1**
(45) Veröffentlichungstag und Bekanntmachung des Hinweises auf die Patenterteilung: **03.03.2004**
(21) Anmeldenummer: 00936745.9
(22) Anmeldetag: 16.05.2000
(51) Int. Cl.: C08F 214/22

(54) **SCHNELL VERNETZENDES FLUORPOLYMER**
RAPIDLY CROSS-LINKING FLUOROPOLYMER
POLYMERE FLUORE A RETICULATION RAPIDE

(30) Priorität: 28.05.1999 DE 19924439
(43) Veröffentlichungstag der Anmeldung: 27.03.2002
(73) Patentinhaber: Bayer Aktiengesellschaft, 51368 Leverkusen (DE)
(72) Erfinder: HARRISON, David, B., D-51373 Leverkusen (DE); BIENER, Wilhelm-Franz, D-51467 Bergisch Gladbach (DE)
(74) Vertreter: Feldhues, Michael L.F., Dr.
(86) Internationale Anmeldenummer: PCT/EP2000/004426
(87) Internationale Veröffentlichungsnummer: WO 2000/073360

(56) Entgegenhaltungen:
- EP-A- 0 692 501
- EP-A- 0 811 641
- WO-A-98/15583
- CHEMICAL ABSTRACTS, vol. 122, no. 16, 17. April 1995 (1995-04-17) Columbus, Ohio, US; abstract no. 190156, XP002143452 & JP 06 331040 A (ASAHI CHEMICAL INC) 29. November 1994 (1994-11-29)

## Beschreibung

Die vorliegende Erfindung betrifft ein Verfahren zur Herstellung von schnellvernetzenden flüssigen Fluorpolymeren aus den essentiellen Bestandteilen Tetrafluorethylen und mindestens einer Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan, das bestimmte Anteile an der Endgruppe der Formel -CH₂-X mit X = Br und/oder Iod sowie Gehalte an Iod/Brom im Bereich von 0,05 bis 1 Gew.-% aufweist und eines bestimmten Molekulargewichtes und Viskosität.

In der Gummiindustrie besteht ein genereller Wunsch nach besserter Verarbeitbarkeit der eingesetzten Kautschuke. Insbesondere betrifft dies die Fließeigenschaften. Je niedrigviskoser der Kautschuk ist, desto einfacher ist die Verarbeitungstechnologie, desto größer ist die Produktivität und desto geringer ist der Abfall. Die genannten Aspekte sind insbesondere bei Fluorkautschuken von großer Relevanz, da es sich hierbei um teure Kautschuke handelt, die nicht durchgehend auf Spritzgießmaschinen der Gummiindustrie verarbeitet werden können.

Fluorkautschuke mit Mooney-Viskositäten (ML₁₊₁₀ bei 120°C) > 60 können meist nur durch Preß- oder Transfer-Molding-Verfahren verarbeitet werden. Fluorkautschuke mit Mooney-Viskositäten ≤60 können zwar auf speziellen Spritzgießmaschinen für Festkautschuke verarbeitet werden, jedoch erfordert dies lange Zykluszeiten und ist zudem mit einem erheblichen Anteil an Abfall (Flash-out) verknüpft.

Bekannt sind Kautschuke mit Mooney-Viskositäten (ML₁₊₁₀ bei 120°C) von 20-60 Mooney-Einheiten, die nach diesem Prinzip zu Formpreßteilen verarbeitet werden können. Diese Kautschuke weisen noch keine deutliche Verschlechterung der gummimechanischen Eigenschaften auf [P. Ferrandez, St. Böwers, Gummi Fasern Kunstst. 48 (1995) 626-633].

Eine stärkere Verminderung des Molgewichtes zum Zwecke der Viskositätserniedrigung darüber hinaus führt aber bei Kautschuken, insbesondere bei Fluorkautschuken zu einer Verschlechterung der Vulkanisateigenschaften, insbesondere der Festigkeit. Flüssig-Fluorkautschuke sind aus US-A-5,852,125 bekannt. Die hierin beschriebenen Fluorkautschuke besitzen jedoch eine niedrigere Molmasse und einen höheren Gehalt an Jod als die in dieser Anmeldung offenbarten. Zudem vemetzen Sie langsamer.

Weiterhin ist die Lagerstabilität heute noch bei vielen Mischungen ein Problem. So sind z.B. die in US-A 4361678 beschriebenen niedrigmolekularen Fluorkautschuke mit Iodgehalten zwischen 1 und 30 Gew %, die einen Molekulargewichtsregler vom Typ Rf/Iₓ enthalten, wobei Rf einen Perfluorkohlenstoff-, Perfluorchlorkohlenstoff- oder Fluorchlorkohlenwasserstoffrest darstellt, nicht lagerstabil. Die fehlende Lagerstabilität resultiert dabei wahrscheinlich daraus, daß in dem Regler das Iodatom an einem mindestens ein Fluoratom enthaltenden Kohlenstoffatom, bevorzugt an einem Perfluorkohlenstoffrest gebunden ist und somit mindestens die Hälfte der resultierenden Endgruppen die Struktur -Rf-I, z.B. -CF₂-I aufweisen. In solchen Gruppen ist die Iod-Kohlenstoff-Bindung besonders labil und es kann thermisch oder lichtinduziert sehr leicht Iod abgespalten werden. Dadurch wird die Handhabung der Fluorpolymere mit hohen lodgehalten sehr erschwert. Zudem können die für die Vernetzung vorgesehenen Reaktivgruppen vorzeitig abreagieren bzw. die dabei entstehenden polymeren Radikale rekombinieren. Daraus hergestellte vemetzte Formkörper zeigen zudem schlechte Alterungseigenschaften, siehe V. Arcella et al., Kautsch. Gummi, Kunstst. 44 (1991) 833-837.

Regler, die mindestens ein Iod- oder Bromatom an einer CH₂-Gruppe enthalten, wie z.B. in JP-A 60 221 409 bzw. EP-A 101 930 beschrieben, haben laut WO 94/07929 den Nachteil, daß sie die Polymerisation sehr stark retardieren. Diese wurden bislang nur eingesetzt, um Fluorkautschuke mit hohem Molekulargewicht bzw. niedrigen Iodgehalten herzustellen.

Von den nichtwäßrigen Verfahren erweisen sich Polymerisationen im reinen verflüssigten Fluormonomer als ungünstig, da die entstehenden Polymere darin meist nicht löslich sind und auch nur wenig quellen. Eine reproduzierbare Polymerisationsführung mit gutem Wärme- und Stoffübergang und damit akzeptablen Raum-Zeit-Ausbeuten ist auf diesem Wege ebensowenig möglich.

Hingegen lassen sich Fluormonomere in Gegenwart von bestimmten fluorhaltigen Lösungsmitteln gut polymerisieren, siehe z.B. US- 4 243 770, DE-A 196 40 972.1. In US 5 182 342 wird die Verwendung von Fluorkohlenwasserstoffen in Anwesenheit von zu 20 % Wasser als Polymerisationsmedium beschrieben, die bestimmte Kriterien in bezug auf das F/H-Verhältnis sowie die Lage der Wasserstoffe erfüllen. Bei allen Verbindungen dieser Art, die Wasserstoff und gegebenenfalls noch zusätzlich Chlor enthalten, besteht immer das Problem, daß diese Übertragungs- und/oder Abbruchreaktionen eingehen können.

In WO-98/15583 wird 1,1,2-Trichlortrifluorethan als Polymerisationsmedium verwendet. Verbindungen dieses Typs (Fluorchlorkohlenstoffe) besitzen jedoch ein erhebliches Ozonschädigungspotential. Ihr technischer Einsatz ist aus diesem Grund bereits in vielen Industrieländern verboten. Die in diesem Patent beschriebenen Fluorkautschuke enthalten 0,5-2,5 Gew.% Iod-Endgruppen.

In der Anmeldung DE 197 40 633 werden Flüssig-Fluorkautschuke in inerten Lösungsmitteln des Typs RF-SO2F-oder. Perfluoralkylsulfon in Anwesenheit eines Molmassenreglers hergestellt. Die hier beschriebenen Fluorkautschuke besitzen ebenfalls Iod- oder Brom-Endgruppen, jedoch wird die in dieser Anmeldung vorliegende Merkmalskombination und deren überraschender Einfluß auf die Vernetzungsgeschwindigkeit nicht erwähnt.

In der Anmeldung WO-A-98/15583 wird ein flüssiger Fluorkautschuk und ein Verfahren zu dessen Herstellung beschrieben. Jedoch wird die in dieser Anmeldung vorliegende Merkmalskombination und deren überraschender Einfluß auf die Vernetzungsgeschwindigkeit nicht erwähnt und die Molmassen sind zu gering.

Daher bestand weiterhin ein Bedarf an Flüssig-Fluorkautschuken, die zumindest bei leicht erhöhten Temperaturen (60-120°C) pumpbar sind und auf herkömmlichen Thermoplastverarbeitungsmaschinen verarbeitbar sind. Zudem sollten diese Flüssig-Fluorkautschuke lagerstabil und schnell vemetzbar sein und die resultierenden Gummiteile gute mechanische sowie Alterungs-Eigenschaften besitzen, die denen von herkömmlichen Fest-Fluorkautschuken sehr nahe kommen.

Aufgabe der vorliegenden Erfindung war daher die Bereitstellung eines Verfahrens zur Herstellung von Fluorkautschuken, die dieses Eigenschaftsprofil aufweisen.

Eine weitere Aufgabe der Erfindung war die Nachteile der aus dem Stand der Technik bekannten Fluor-Kautschuk wenigstens teilweise aufzuheben.

Es wurde nun gefunden, daß Fluorkautschuk, aus den essentiellen Bestandteilen Tetrafluorethylen und mindestens einer Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan, der bestimmte Anteile an der Endgruppe der Formel -CH₂-X mit X = Br und/oder Iod sowie Gehalte an Iod und/oder Brom im Bereich von 0,05 bis 1 Gew.-% aufweist und eines bestimmten Molekulargewichtes und Viskosität, diese Aufgabe löst.

Gegenstand der vorliegenden Erfindung ist daher ein Verfahren zur Herstellung einen flüssigen Fluorpolymeren durch radikalische Polymerisation in einem nicht-wässrigen Lösungsmittel ohne Ozonschädigendes Potential in Gegenwart eines Initiators und/oder weiteren Hilfsstoffen bei Temperaturen von -20 bis +130°C aus Tetrafluorethylen und gegebenenfalls weiteren fluorhaltigen und/oder nicht-fluorhaltigen Monomeren und mindestens einer Co-Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan, in dem mindestens 80% der Endgruppen die Formel -CH₂-I und/oder -CH₂-Br aufweisen und das eine komplexe Viskosität bei 100°C und ω = 6,3 s⁻¹ von 0,01-30 kPas sowie einen Temperaturindex, berechnet als Quotienten der Viskositäten bei 40 und 100°C von 3-250 besitzt, dadurch gekennzeichnet, daß das Fluorpolymer
a) mehr als 10 Mol-% aus Tetrafluorethylen abgeleitete Wiederholungseinheiten besitzt,
b) der Gehalt an Iod und/oder Brom im Bereich von 0,05 bis 1 Gew.-% beträgt und
c) das Molekulargewichtsmittel (Zahlenmittel Mn) über 25.000 g/mol beträgt.

Fluorhaltige Monomere im Sinne der Erfindung sind vorzugsweise fluorierte, gegebenenfalls substituierte Ethylene, die neben Fluor Wasserstoff und/oder Chlor enthalten können, wie z.B. Vinylidenfluorid und Chlortrifluorethylen, fluorierte 1-Alkene mit 2-8 Kohlenstoffatomen, wie z.B. Hexafluorpropen, 3,3,3-Trifluorpropen, Chlorpentafluorpropen, Pentafluorpropen, Hexafluorisobuten und/oder perfluorierte Vinylether der Formel CF₂=CF-O-X mit X = C₁-C₃-Perfluoralkyl oder -(CF₂-CFY-O)ₙ-R_{F}, wobei n = 1-4, Y = F oder CF₃ und R_{F} = C₁-C₃-Perfluoralkyl bedeuten.

Nicht-fluorhaltige Monomere im Sinne der Erfindung sind dabei vorzugsweise Ethylen, Propen, Isobuten oder Vinylester, wie z.B. Vinylacetat.

Das erfindungsgemäße Fluorpolymer ist vorzugsweise ein (Co)-Polymerisat erhältlich durch (Co)-Polymerisation eines Gemisches aus Tetrafluorethylen, Vinylidenfluorid und weiteren fluorhaltigen und/oder nicht-fluorhaltigen Monomeren.

Besonders bevorzugt ist die Kombinationen aus Tetrafluorethylen, Vinylidenfluorid, Hexafluorpropen sowie gegebenenfalls perfluorierten Vinylethern, wie z.B. Perfluor(methyl-vinyl-ether).

Das erfindungsgemäße Fluorpolymer enthält mehr als 10 Mol-% an von Tetrafluorethylen abgeleiteten Einheiten und vorzugsweise weniger als 60 Mol-% an von Vinylidenfluorid abgeleiteten Einheiten, sowie gegebenenfalls weitere von fluor- oder nicht-fluorhaltigen Monomeren.

Abgeleitet bedeutet, daß die entsprechenden Verbindungen als Monomere eingesetzt werden.

Die Co-Verbindung ist vorzugsweise Diiodmethan.

Die Co-Verbindungen sind leicht zugänglich, z.B. durch Halogen- oder Interhalogenaddition an Vinylidenfluorid.

Vorzugsweise besitzen mehr als 90 % der Endgruppen die Formel -CH₂X mit X = Iod- oder Brom. Der Gehalt an Iod und/oder Brom liegt im Bereich von 0,1 bis 1 Gew.-%, bevorzugt von 0,5 - 1. Besonders bevorzugt ist Iod. Das Iod und/oder Brom sitzt hierbei ausschließlich am Kettenende.

Wie ¹⁹F- und ¹H-NMR-spektroskopisch nachgewiesen werden konnte, enthält das erfindungsgemäße Fluorpolymer keine Gruppen der Formel -CF₂-I oder >CF-I, an denen thermisch oder lichtinduziert besonders leicht Iod abgespalten werden könnte.

Die Zahlenmittel der Molekulargewichte Mn liegen oberhalb 25 000 g/mol, bevorzugt oberhalb 30 000, jedoch immer mit der Maßgabe, daß das Fluorpolymer eine komplexe Viskosität bei 100°C und ω = 6,3 s⁻¹ von 0,01 bis 30 kPas sowie einen Temperaturindex, berechnet als Quotienten der Viskositäten bei 40 und 100°C von 3 bis 250 besitzt.

In einer bevorzugten Ausführungsform der Erfindung werden dem erfindungsgemäßen Fluorpolymer Füllstoffe, wie z.B. Ruß, Kieselsäure, TiO₂ (füllstoffhaltige Mischung) und/oder Vernetzungschemikalien, d.h. Katalysator und Covernetzer (vernetzungsfähige und gegebenenfalls füllstoffhaltige Mischung), wie z.B. ein organisches Peroxid und ein Triallylisocyanurat (siehe z.B. EP-A 398 241) oder Bisamine/Bisphenole in Kombination mit Phasentransferkatalysatoren und Metalloxiden, wie in A.L. Logothetis, Prog. Polym. Sci., Band 14, (1989), 251-296 beschrieben, zugemischt.

Die erfindungsgemäßen Fluorpolymere bzw. daraus hergestellte füllstoffhaltige Mischungen besitzen bei Raumtemperatur noch eine den bekannten Festkautschuken ähnliche Konsistenz d.h. höhere Viskosität, und zeigen bei Temperaturerhöhung eine starke Viskositätserniedrigung. Im Temperaturbereich zwischen 60°C und 120°C verfügen sie über eine quasi flüssige Konsistenz. Die komplexen Viskositäten, gemessen mit in einem Scher-Oszillations-Experiment mit einem Bohlin-Rheometer des Typs VOR-Melt (Kreisfrequenz ω = 6,3 s⁻¹), jeweils in kPa s liegen vorzugsweise in folgenden charakteristischen Bereichen:

| | | |
|---|---|---|
| Viskosität, ω = 6,3 s⁻¹ [kPa.s] | 40°C | 100°C |
| Fluorpolymer | 1-100 | 0,01-30 |
| (Fluorpolymer + 30 Gew.-Tle. Ruß MTN 990) | 10-200 | 0,1-50 |

Entsprechend liegt der Temperaturindex, berechnet als Quotient der Viskositäten bei 40 und 100°C, bevorzugt bei 3 bis 250 für das Fluorpolymer, bzw. bei 3 - 300 für das füllstoffhaltige Fluorpolymer (füllstoffhaltige Mischung).

In einer Ausführungsform der Erfindung wird das erfindungsgemäße Fluorpolymer zu gummielastischen Formkörpern vernetzt. Dies geschieht vorzugsweise radikalisch durch Strahlung oder mittels Peroxiden. Auch die füllstoffhaltigen oder auch vernetzungsfähigen und gegebenenfalls füllstoffhaltigen Mischungen können vorzugsweise durch Strahlung oder mittels Peroxiden zu gummielastischen Formkörpern vernetzt werden.

Der Gegenstand der Erfindung ist ein Verfahren zur Herstellung des erfindungsgemäßen Fluorpolymers, in dem Tetrafluorethylen mit gegebenfalls einem weiteren fluorhaltigen oder nicht-fluorhaltigen Monomer in Gegenwart von mindestens einer iod- und/oder bromhaltigen Co-Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan bei Temperaturen von -20°C bis +130°C, bevorzugt +20°C bis +100°C, in Gegenwart eines Initiators und/oder weiteren Hilfsstoffen, vorzugsweise eines Redoxinitiatorsystems, radikalisch polymerisiert wird.

Die Polymerisation wird in Lösung, durchgeführt.

Die Menge an Co-Verbindung beträgt im Bereich von 0,1 bis 1 Gew.-%, bezogen auf die umzusetzenden Fluormonomere, bevorzugt 0,5 - 1 Gew.-%.

Für die Lösungspolymerisation wird ein Lösungsmittel ohne Ozonschädigendes Potential verwendet, wie bestimmte Fluorkohlenwasserstoff- oder Heteroatome enthaltende Fluorkohlenstoff- bzw. Fluorkohlenwasserstoffverbindungen, wie 1,1,1,3,3-Pentafluorpropan, 1,1,1,2,3,3-Hexafluorpropan, 1,1,2,2,3,3-Hexafluorcyclopentan, 1,1,2,2-Tetrafluorcyclobutan, 1-Trifluormethyl-1,2,2-trifluorcyclobutan, 2,3-Dihydrodekafluorpentan, 2,2-Bis(trifluormethyl)-1,3-dioxolan, Perfluor(tripropylamin), Methoxy-2-hydrohexafluorpropan, Methoxynonafluorbutan, Perfluorbutansulfofluorid, Perfluorsulfolan oder auch die in der älteren Anmeldung DE-197 40 633.5 genannten Verbindungen der Formel (I) oder (II)

R¹-SO₂-R² (I),

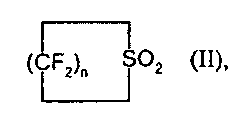

wobei R¹ ein Fluoratom oder einen Perfluoralkylrest mit 1-4 C-Atomen und R² einen Perfluoralkylrest mit 1-4 C-Atomen darstellt und n = 4 oder 5 bedeutet, insbesondere Perfluorbutansulfofluorid und Perfluorsulfolan.

Bevorzugt sind 1,1,1,3,3-Pentafluorpropan, Perfluorbutansulfofluorid und Perfluorsulfolan einzeln oder im Gemisch.

Es ist vorteilhaft, auf niedrige Siedepunkte der Lösungsmittel zu achten, um eine einfache Trennung zwischen Lösungsmittel und Fluorpolymer nach Beendigung der Polymerisation zu ermöglichen. Auf Grund ihrer niedrigen Siedepunkte zwischen 15 und 70°C sowie ihrer geringen Verdampfungsenthalpie können die bevorzugt genannten Verbindungen nach der Polymerisation einfach durch Destillation vom Kautschuk abgetrennt werden.

Das Verhältnis von Fluormonomer (Monomer) zu Lösungsmittel sowie der Reaktorfüllgrad wird vorzugsweise so gewählt, daß bei der Reaktionstemperatur der Anteil des Monomers in der flüssigen Phase mindestens 20 Gew.-% beträgt. Die Menge an in der Flüssigphase gelöstem Monomer kann z.B. aus der Massenbilanz anhand der Partialdrücke des in der Gasphase befindlichen Monomers bestimmt werden.

Als Initiator werden vorzugsweise im Monomer oder Lösungsmittel lösliche organische gegebenenfalls fluorierte Peroxide, wie z.B. tert.-Butylperpivalat, Diisopropyl-peroxidicarbonat bzw. Trifluoracetylperoxid oder Azoverbindungen wie Azobis-(isobutyronitril) bzw. Azo-bis(2,4-dimethylvaleronitril) eingesetzt.

Als Initiatoren können auch anorganische Peroxide, wie z.B. Peroxidisulfate, Perborate, Percarbonate, im allgemeinen in Form ihrer Kalium-, Natrium- oder Ammoniumsalze, vorzugsweise in Kombination mit Reduktionsmitteln eingesetzt werden. Als solche Reduktionsmittel können dienen: Schwefelverbindungen, wie Natriumsulfit, Natriumpyrosulfit oder Rongalit C (Natriumformamidinsulfinsäure), weiterhin organische Reduktionsmittel, wie Ascorbinsäure, Metallsalze, wie Eisen-(II)- oder Kobalt-(II)-Salze, metallorganische Verbindungen etc. Als Redoxinitiatorsystem ist ein System, bestehend aus mindestens einer Manganverbindung in Oxydationsstufen ≥ 3 und gegebenenfalls einem Reduktionsmittel, wie z.B. Carbonsäuren, Dicarbonsäuren, mehrwertigen Alkoholen und Hydroxycarbonsäuren, bevorzugt.

Die Herstellung der erfindungsgemäßen Fluorpolymere kann absatzweise, bevorzugt aber nach halbkontinuierlichen oder kontinuierlichen Verfahren erfolgen.

Es wird unter autogenem Druck gearbeitet, der sich in Abhängigkeit vom Reaktorfüllgrad, der Temperatur und den Monomermengen einstellt.

Die nach dem erfindungsgemäßen Verfahren hergestellten Fluorpolymere können zur Herstellung von Beschichtungen oder für polymeranaloge Umsetzungen zur Substitution der Iod- oder Bromendgruppen vorzugsweise durch andere Reaktivgruppen verwendet werden. Auch die füllstoffhaltigen oder vernetzungsfähigen und gegebenenfalls füllstoffhaltigen Mischungen können zur Herstellung von Beschichtungen oder für polymeranaloge Umsetzung zur Substitution der Iod- oder Bromgruppen durch andere Reaktivgruppen mittels nucleophiler oder radikalischer Substitution verwendet werden.

Die Iod- und Bromgruppen werden vorzugsweise durch Umsetzung mit Verbindungen, die primäre oder sekundäre Aminogruppen, Allyl- oder Vinylgruppen sowie alkylierbare aromatische Reste enthalten, substituiert.

Fluorpolymere mit einem Temperaturindex der Viskosität bei 40/100°C von 3 bis 250, können nach einem Verfahren zur Herstellung von Fluorelastomer-Formkörpern und/oder Beschichtungen bei Temperaturen von 40 bis 250°C unter Druck, vorzugsweise 20 bis 200 bar, in 100 bis 250°C, vorzugsweise 120 bis 200°C, heiße Formen spritzgegossen und dort vernetzt werden.

Das Spritzgießen erfolgt auf handelsüblichen Spritzguß- oder Kolbendosiermaschinen, wie sie z.B. Comprehensive Polymer Science, Bd. 7 (1989) S.356 beschrieben sind. Vorzugsweise wird das Fluorpolymere auf 40 bis 250°C aufgeheizt in die Thermoplast-Spritzguß- oder Kolbendosiermaschine eingeführt. Dafür eignen sich besonders beheizte Dosier- und Fördermaschinen, vorzugsweise beheizte Schöpfkolbenpumpen.

Als Fluorpolymeres wird dabei vorzugsweise der erfindungsgemäße Fluorpolymere oder ein Gemisch aus mehreren erfindungsgemäßen Fluorpolymeren gegebenfalls in Gegenwart weiterer flüssiger Kautschuke eingesetzt.

Ebenfalls eingesetzt werden können füllstoffhaltige Mischungen oder vernetzungsfähige und gegebenenfalls füllstoffhaltige Mischungen.

Die verbesserte Fließfähigkeit erlaubt den Einsatz von vernetzenden bzw. die Vernetzung aktivierenden/auslösenden Chemikalien, wie z.B. Peroxide, Basen oder Initiatoren mit erhöhter Reaktionsgeschwindigkeit. Diese bewirken im Rheometer einen Vemetzungsverlauf mit Halbwertzeiten für 50 %igen Anstieg des Schubmoduls, genannt t50, von 1 bis 20 min bei 100°C.

In der 100 bis 250°C heißen Form können die Fluorpolymere z.B. direkt über die endständigen Iod- oder Bromatome als Reaktivgruppen vemetzt werden. Dies kann auf dem üblichen radikalischen Wege durch radikalbildende Substanzen, wie organische Peroxide oder durch nucleophile Substitution des endständigen Iods, beispielsweise mittels polyfunktionellen Aminen, erfolgen.

Zur Herstellung der Formkörpern wird die Fluorpolymermischungen bei Temperaturen von 40 bis 250°C unter Druck, vorzugsweise 20 bis 400 bar; in 100 bis 250°C, vorzugsweise 120 bis 220 °C, heiße Formen spritzgegegossen und dort radikalisch vemetzt. Das Spritzgießen erfolgt auf handelsüblichen Thermoplast-Spritzguß- oder Kolbendosiermaschinen.

Desweiteren können die endständigen Iodatome auch durch andere Reaktivgruppen ersetzt und anschließend vemetzt werden. Dazu können beispielsweise nukleophile Substitutionsreaktionen, wie eine Aminierung oder Verseifung dienen. Endständige C-C-Doppelbindungen lassen sich z.B. durch radikalische Addition von Allylacetat mit anschließender Eliminierung einführen.

Der erfindungsgemäße Fluorpolymere stellt insofern eine Besonderheit dar, da er sich mit der vorteilhaften Technologie der Flüssigkautschukverarbeitung zu vernetzen Formteilen oder Beschichtungen einsetzen läßt und mit einer überraschend hohen Vernetzungsgeschwindigkeit Netzwerke bildet.

Die Kombination aus guter Fließfähigkeit und außergewöhnlich hoher Vernetzungsgeschwindigkeit für kovalent vernetzte Elastomere konnte man bisher nur bei Flüssigsilikon-Kautschuk nutzen, um die Zykluszeiten für die Herstellung elastomerer Formkörper zu verkürzen.

Die nachfolgenden Beispiele verdeutlichen die Erfindung.

### Ausführungsbeispiele:

### Beispiele

Normen/Bedingungen/Information

| **Test** | **Bedingung** | **Information** |
|---|---|---|
| Zusammensetzung des Fluorpolymers | ¹⁹F NMR; Lösungsmittel Aceton; Standard CFCl₃ | Mol.% VDF, TFE, HFP |
| Molekulargewicht Mn | GPC in DMAC ergibt Mn relativ zu PMMA-Standards. Das absolute Mn wird mit Hilfe einer durch Membranosmose erstellten Eichkurve errechnet. | Zahlenmittel des Molekulargewichts Mn |
| Jod-Gehalt | Elementaranalyse | Gew.% Jod |
| Viskosität | Scher-Oszillationsexperiment in Bohlin Melt-VOR bei 40 und 100°C und Kreisfrequenz 6,3 s⁻¹ | Viskosität/Temperatur Verhalten |
| Vulkameter | Monsanto Rheometer MDR 2000E bei 170°C nach DIN53529 | Geschwindigkeit der Vernetzung als Zeit zwischen tₛ₁ (Anvulkanisationszeit) und t₉₀ (90 % des Drehmoment-maximums) |

### Beispiele 1-8, davon sind Beispiele 3-5 erfindungsgemäß:

In einem 4,1-1-Autoklaven wurden 1155 g 1,1,1,3,3-Pentalluorpropan (PFP), 0,3 g t-Butylperoxy-2-ethylhexanoat (TBPEH) und Diiodmethan (DIM) (Tabelle 1) vorgelegt. Der geschlossene Autoklav wurde unter Kühlung zweimal jeweils evakuiert, anschließend mit 3 bar Stickstoffdruck beaufschlagt und jeweils 10 min langsam gerührt. In den evakuierten Autoklaven wurden Vinylidenfluorid (VDF), Hexafluorpropen (HFP) und Tetrafluorethylen (TFE) (Tabelle 1) gegeben und das Reaktionsgemisch unter Rühren auf 80°C erwärmt.

An der beginnenden Druckabnahme erkennbar, setzte die Polymerisation nach ca. zwei Stunden ein. Während der Polymerisation wurde ein Monomergemisch so nachgedrückt, daß der Autoklaveninnendruck konstant gehalten wurde. Auf diese Weise wurden insgesamt 600 bis 1000 g Monomergemisch (Tabelle 1) nachdosiert. Darüber hinaus wurde nach drei Stunden Polymerisation 19,9 ml und nach 300 g und 600 g Umsatz jeweils 12,4 ml einer Initiator-Lösung (50 g.l-1 TBPEH in PFP) den Reaktor zugegeben.

Nach Beendigung der Polymerisation wurde das Reaktionsgemisch abgekühlt und das nicht umgesetzte Monomergemisch durch Entspannung und Evakuierung aus dem Reaktor entfernt.
Nach Abstellen des Rührers wurde der Reaktorinhalt über ein Bodenablaßventil in ein zweites darunterliegendes Druckgefäß abgelassen. Nach Abtrennung des Fluorpolymer-Produktes vom PFP wurde dieses getrocknet (Tabelle 1). Die Analyse Ergebnisse der Fluorpolymer-Produkte sind im Tabelle 2 eingetragen.

Die Fluorpolymere wurden zur vernetzungsfähigen Mischungen der folgenden Zusammensetzung auf einen Zweiwalzen-Gummimischwerk abgemischt:

| | |
|---|---|
| 100 Teile Fluorpolymere: | aus den Beispielen 1-8 |
| 30 Teile Ruß MTN 990 | |
| 3 Teile Ca(OH)₂ | |
| 4 Teile Perkalink 301-50 | = 50 Gew.% Triallylisocyanurat auf inertem Füllstoff |
| 3 Teile Luperco 101-XL-45 | = 45 Gew.% 2,5-Dimethyl-2,5-di(t-butylperoxy)hexan auf inertem Füllstoff |

Die Vulkanisatation der Fluorpolymermischungen wurde auf einem Monsanto MDR2000E Rheometer bei 170°C untersucht. Die Zeit zwischen tₛ₁ (Anvulkanisationszeit) und t₉₀ (90% des Drehmomentmaximums) diente als Maß für die Vernetzungszeit (Tabelle 3): Je kürzer die Zeit desto schneller die Vernetzung.

**Tabelle 1:**

| Einsatzmengen bei der Polymerisation. | | | | | | | |
|---|---|---|---|---|---|---|---|
| **Beispiel** | **VDF Vorlage / g** | **HFP Vorlage / g** | **TFE Vorlage / g** | **DIM Vorlage / g** | **VDF Dosierung / g** | **HFP Dosierung / g** | **TFE Dosierung / g** |
| 1 | 353 | 1342 | 45 | 18 | 542 | 323 | 130 |
| 2 | 353 | 1350 | 48 | 16 | 530 | 332 | 138 |
| 3 | 144 | 1709 | 136 | 8 | 360 | 370 | 268 |
| 4 | 144 | 1708 | 137 | 9 | 364 | 378 | 262 |
| 5 | 144 | 1710 | 135 | 10 | 369 | 377 | 276 |
| 6 | 144 | 1711 | 134 | 13 | 359 | 378 | 267 |
| 7 | 143 | 1719 | 135 | 18 | 361 | 381 | 262 |
| 8 | 448 | 1044 | 0 | 12 | 353 | 235 | 0 |

**Tabelle 2:**

| **Eigenschaften der Fluorpolymere** | | | | | | | | |
|---|---|---|---|---|---|---|---|---|
| **Beispiel** | **Mol.% VDF** | **Mol.% HFP** | **Mol.% TFE** | **Gew.% Jod** | **Mn kg/mol** | **Viskosität bei 40°C / Pa.s** | **Viskosität bei 100°C / Pa.s** | **Verhältnis der Viskositäten 40°C:100°C** |
| 1 | 70,6 | 19,4 | 10,0 | 1,5 | 20,37 | 15800 | 216 | 73 |
| 2 | 68,7 | 20,1 | 11,2 | 1,4 | 21,97 | 14600 | 248 | 59 |
| 3 | 54,0 | 20,2 | 25,8 | 0,9 | 31,98 | 45300 | 1420 | 32 |
| **4** | **53,8** | **21,0** | **25,2** | **0,8** | **29,56** | **41000** | **976** | **42** |
| **5** | **54,3** | **21,8** | **23,9** | **0,9** | **27,94** | **34500** | **630** | **55** |
| 6 | 53,7 | 20,7 | 25,6 | 1,2 | 22,58 | 18400 | 207 | 89 |
| 7 | 53,9 | 21,2 | 24,8 | 1,7 | 17,66 | 7610 | 63 | 121 |
| 8 | 77,9 | 22,1 | 0,0 | 1,4 | 16,57 | 10900 | 128 | 85 |

**Tabelle 3:**

| **Eigenschaften der vulkanisierten Fluorpolymere** | | | | | |
|---|---|---|---|---|---|
| **Beispiel** | **S'min/ dNm** | **S'max/ dNm** | **t**_{**s1**} **/ min** | **t**_{**90**}**/ min** | **t**_{**90**} **- t**_{**s1**} / **min** |
| 1 | 0,01 | 19,83 | 0,64 | 5,56 | 4,92 |
| 2 | 0,02 | 20,33 | 0,62 | 5,49 | 4,87 |
| 3 | 0,04 | 21,18 | 0,57 | 2,37 | 1,80 |
| 4 | 0,04 | 22,02 | 0,58 | 2,56 | 1,98 |
| 5 | 0,03 | 20,30 | 0,60 | 2,65 | 2,05 |
| 6 | 0,02 | 24,41 | 0,58 | 3,91 | 3,33 |
| 7 | 0,01 | 23,76 | 0,62 | 4,93 | 4,31 |
| 8 | 0,02 | 9,87 | 0,81 | 7,27 | 6,46 |

## Patentansprüche

1. Verfahren zur Herstellung von flüssigen Fluorpolymeren durch radikalische Polymerisation in einem nicht-wässrigen Lösungsmittel ohne Ozonschädigendes Potential, in Gegenwart eines Initiators und/oder weiteren Hilfsstoffen bei Temperaturen von -20 bis +130°C, aus Tetrafluorethylen und gegebenenfalls weiteren fluorhaltigen und/oder nicht-fluorhaltigen Monomeren und mindestens einer Co-Verbindung aus der Gruppe Diiodmethan, 1,2-Diiod-1,1-difluorethan, 1-lod-2-brom-1,1-difluorethan, 1-Brom-2-iod-1,1-difluorethan und/oder 1,2-Dibrom-1,1-difluorethan, wobei in dem flüssigen Fluorpolymer mindestens 80% der Endgruppen die Formel -CH₂-I und/oder -CH₂-Br aufweisen und das flüssige Fluorpolymer eine komplexe Viskosität bei 100°C und ω = 6,3 s-1 von 0,01 bis 30 kPas sowie einen Temperaturindex, berechnet als Quotienten der Viskositäten bei 40 und 100°C, von 3 bis 250 besitzt und das flüssige Fluorpolymer
a) mehr als 10 Mol% aus Tetrafluorethylen abgeleitete Wiederholungseinheiten,
b) einen Gehalt an Iod und/oder Brom im Bereich von 0,05 bis 1 Gew.-% und
c) ein Molekulargewichtsmittel (Zahlenmittel Mn) über 25.000 g/mol besitzt.

2. Verfahren nach Anspruch 1, wobei das nicht-wässrige Lösungsmittel ohne ozonschädigendes Potential ausgewählt ist aus der Gruppe bestehend aus 1,1,1,3,3-Pentafluorpropan, 1,1,1,2,3,3-Hexafluorpropan, 1,1,2,2,3,3-Hexafluorcyclopentan, 1,1,2,2-Tetracyclobutan, 1-Trifluormethyl-1,2,2-trifluorcyclobutan, 2,3-Dihydrodecafluorpentan, 2,2-Bis(trifluormethyl)-1,3-dioxolan, Perfluor(tripropylamin), Methoxy-2-hydrohexafluorpropan, Methoxynonafluorbutan, Perfluorbutansulfofluorid, Perfluorsulfolan und Verbindungen der allgemeinen Formel (I) oder (II)
R¹―SO₂―R² (I), 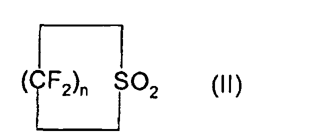
wobei
R¹ ein Fluoratom oder einen Perfluoralkylrest mit 1-4 C-Atomen und
R² einen Perfluoralkylrest mit 1-4 C-Atomen darstellt und
n 4 oder 5 bedeutet.

3. Verfahren nach einem der Ansprüche 1 bis 2, wobei als nicht-wässriges Lösungsmittel ohne ozonschädigendes Potential 1,1,1,3,3-Pentafluorpropan, Perfluorbutansulfofluorid, Perfluorsulfolan oder Gemische dieser Lösungsmittel verwendet werden.

## Claims

1. Process for the production of liquid fluoropolymers by radical polymerisation in a non-aqueous solvent without ozone-damaging potential, in the presence of an initiator and/or other auxiliary substances at temperatures of -20 to +130°C, from tetrafluoroethylene and optionally other fluorine-containing and/or non-fluorine-containing monomers and at least one co-compound from the group diiodomethane, 1,2-diiodo-1,1-difluoroethane, 1-iodo-2-bromo-1,1-difluoroethane, 1-bromo-2-iodo-1,1-difluoroethane and/or 1,2-dibromo-1,1-difluoroethane, wherein at least 80% of the terminal groups in the liquid fluoropolymer have the formula -CH₂-I and/or -CH₂-Br and the liquid fluoropolymer has a complex viscosity at 100°C and ω = 6.3 s⁻¹ of 0.01 to 30 kPas and a temperature index, calculated as quotients of the viscosities at 40 and 100°C of 3 to 250, and the liquid fluoropolymer
a) has more than 10 mol% repeated units derived from tetrafluoroethylene,
b) contains iodine and/or bromine in the range of 0.05 to 1 wt.% and
c) has an average molecular weight (number average Mn) of over 25,000 g/mol.

2. Process according to claim 1, wherein the non-aqueous solvent without ozone-damaging potential is selected from the group consisting of 1,1,1,3,3-pentafluoropropane, 1,1,1,2,3,3-hexafluoropropane, 1,1,2,2,3,3-hexafluoro cyclopentane, 1,1,2,2-tetracyclobutane, 1-trifluoromethyl-1,2,2-trifluoro cyclobutane, 2,3-dihydrodecafluoropentane, 2,2-bis(trifluoromethyl)-1,3-dioxolane, perfluoro(tripropylamine), methoxy-2-hydrohexafluoropropane, methoxynonafluorobutane, perfluorobutane sulfofluoride, perfluorosulfolane and compounds of the general formula (I) or (II)
R¹―SO₂―R² (I), 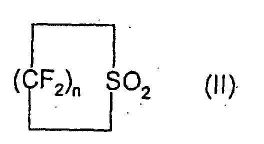
wherein
R¹ is a fluoro atom or a perfluoroalkyl group having 1-4 C atoms and
R² is a perfluoroalkyl group having 1-4 C atoms and
n means 4 or 5.

3. Process according to one of claims 1 to 2, wherein 1,1,1,3,3-pentafluoropropane, perfluorobutane sulfofluoride, perfluorosulfolane or mixtures of these solvents are used as a non-aqueous solvent without ozone-damaging potential.

## Revendications

1. Procédé de préparation d'un polymère fluoré liquide, par polymérisation radicalaire dans un solvant non-aqueux sans potentiel de dommage à l'ozone en présence d'un initiateur et/ou d'autres adjuvants à des températures de -20 à +130°C, à partir de tétrafluoréthylène et, éventuellement, d'autres monomères fluorés et/ou non fluorés et d'au moins un co-composé du groupe méthane diiodé, 1,2-diiodo-1,1-difluoréthane, 1-iodo-2-bromo-1,1-difluoréthane, 1-bromo-2-iodo-1,1-difluoréthane et/ou 1,2-dibromo-1,1-difluoréthane dans lequel au moins 80% des radicaux de fin de chaîne répondent à la formule -CH₂-I et/ou -CH₂-Br et qui possède une viscosité complexe à 100°C et ω = 6,3 s-1 de 0,01-30 kPas ainsi qu'un indice de température calculé comme le quotient des viscosités à 40 et 100°C de 3-250, le polymère fluoré:
a) possèdant plus de 10% en mole d'unités de répétition dérivées du tétrafluoréthylène,
b) le taux d'iode et/ou de brome étant de l'ordre de 0,05 à 1 % en poids et
c) la moyenne du poids moléculaire (moyenne en nombre Mn) dépassant 25.000 g/mole.

2. Procédé selon la revendication 1, dans lequel le solvant non-aqueux sans potentiel de dommage à l'ozone est choisi dans le groupe composé du 1,1,1,3,3-pentafluoropropane, du 1,1,1,2,3,3-hexafluoropropane, du 1,1,2,2,3,3-hexafluorocyclopentane, du 1,1,2,2-tétrafluorocyclobutane, du 1-trifluorométhyl-1,2,2-trifluorocyclobutane, du 2,3-dihydrodécafluoropentane, du 2,2-bis(trifluorométhyl)-1,3-dioxolane, de la perfluoro(tripropylamine), du méthoxy-2-hydrohexafluoropropane,du méthoxynonafluorobutane, du perfluorobutanesulfofluorure et des composés de formule générale (I) ou (II)
R¹-SO₂-R² (I), 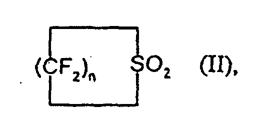
dans laquelle
R¹ désigne un atome de fluor ou un radical perfluoralkyle avec 1 à 4 atomes C
R² désigne un radical perfluoralkyle avec 1 à 4 atomes C et
n = 4 ou 5.

3. Procédé selon une des revendications 1 à 2, dans lequel le 1,1,1,3,3-pentafluoropropane, le perfluorobutanesulfofluorure, le perfluorosulfolane ou des mélanges de ces solvants sont utilisés comme solvant non aqueux sans potentiel de dommage à l'ozone.
